# EUROPÄISCHE PATENTANMELDUNG

(11) **EP 2 455 919 A2**
(43) Veröffentlichungstag der Anmeldung: **23.05.2012**
(21) Anmeldenummer: 11009169.1
(22) Anmeldetag: 18.11.2011
(51) Int. Cl.: G07C 13/00

(54) **Verfahren zum elektronischen Abstimmen über ein Mobilfunknetz**

(30) Priorität: 22.11.2010 DE 102010052170
(71) Anmelder: Giesecke & Devrient GmbH, 81677 München (DE)
(72) Erfinder: Behlendorf, Sascha, 81829 München (DE)

(57) **Zusammenfassung**

Die Erfindung betrifft Verfahren zum elektronischen Abstimmen über ein Mobilfunknetz (25) in einer vertrauenswürdigen Instanz (21) in einem mobilen Endgerät (23) eines Wahlberechtigten (20), ein Verfahren zum elektronischen Abstimmen über ein Mobilfunknetz (25) in einer Wahlinstanz (22) sowie einem Verfahren zum Registrieren eines Wahlberechtigten an dem elektronischen Abstimmen. Das Verfahren nach Anspruch 1 umfasst dabei die Verfahrensschritte: Empfangen (9) eines Identitätsnachweises des Wahlberechtigten (20) in der vertrauenswürdigen Instanz (21); Senden (10) der persönlichen Identifikationsnummer von der vertrauenswürdigen Instanz (21) über das Mobilfunknetz (25) an eine Wahlinstanz (22); Empfangen (12) eines elektronischen Wahlschlüssels in der vertrauenswürdigen Instanz (21) von der Wahlinstanz (22) über das Mobilfunknetz (25) an die vertrauenswürdige Instanz (21), wobei der Wahlschlüssel für alle Wahlberechtigten (20) zumindest einer Region gleich ist; Empfangen (8) einer Abstimminformation des Wahlberechtigten (20) in der vertrauenswürdigen Instanz (21); Verschlüsseln (15) von Abstimminformation und einer Zufallszahl mit dem Wahlschlüssel und Senden (16) der verschlüsselten Abstimminformation mit Zufallszahl von der vertrauenswürdigen Instanz über das Mobilfunknetz (25) an die Wahlinstanz (22) mittels eines verbindungslosen Netzwerkprotokolls.

## Beschreibung

Die Erfindung betrifft ein Verfahren zum elektronischen Abstimmen über ein Mobilfunknetz in einer vertrauenswürdigen Instanz in einem mobilen Endgerät eines Wahlberechtigten, ein Verfahren zum elektronischen Abstimmen über ein Mobilfunknetz in einer Wahlinstanz sowie einem Verfahren zum Registrieren eines Wahlberechtigten an dem elektronischen Abstimmen.

Für diese Anmeldung kann es sich um politikwissenschaftliches, vereinstechnisches, arbeitstechnisches Abstimmen handeln. Der Begriff Abstimmen wird darüber hinaus synonym mit dem Begriff Wahl, Volksentscheid oder Abstimmung verwendet. Eine Wahl im politikwissenschaftlichen Sinn ist ein Verfahren in Staaten, Organisationen etc. zur Bestellung einer repräsentativen Person oder mehrerer Personen als Entscheidung oder Herrschaft ausübendes Organ. Ein Volksentscheid hingegen ist ein Instrument der direkten Demokratie und ermöglicht Wahlberechtigten über eine Gesetzesvorlage unmittelbar abzustimmen. Das Abstimmen unterliegt dabei einer Reihe von Anforderungen, beispielsweise dürfen nur Personen eine Stimme abgeben, die für die Wahl zugelassen sind. Weiterhin darf jeder Wahlberechtigte nur einmal seine Stimme abgeben und diese Stimme ist gleichgewichtig zu den Stimmen anderer Wähler. Die Stimmabgabe erfolgt insbesondere anonym und die Abgabe der Stimme darf nicht manipuliert werden.

Seit geraumer Zeit gibt es für Wahlberechtigte die Möglichkeit, ihre Stimme in Form einer Briefwahl abzugeben, wobei unter diesem Begriff alle Alternativen zur klassischen Urnenwahl im Wahllokal zusammengefasst sind. Die Prozentzahl von Wahlberechtigten, die sich für die Briefwahl entscheiden, liegt heutzutage bei über 20%.

Mittlerweile gibt es auch Verfahren zum Abstimmen, die es dem Wahlberechtigten ermöglichen, seine Stimme in einem elektronischen Wahlverfahren abzugeben und dabei die notwendigen Anforderungen an eine Wahl einzuhalten. Derartige Verfahren werden auch als e-Voting Verfahren bezeichnet.

Eine österreichische Studie mit diversen Publikationen zum Thema e-Voting aus dem Jahr 2002 ist beispielsweise auf der Internetseite http://www.e-Voting.at abrufbar. Speziell die Publikation "epub-wu-01_3c4.pdf" stellt sich die Aufgabe, ein anonymes, nachvollziehbares und manipulationssicheres Abgeben von Stimmen über ein Netzwerk zu ermöglichen. Dazu werden alle verwendeten Applet- Quelltexte offengelegt. Das Verfahren verläuft in weiten Teilen mit digitalen Signaturen. In der Studie ist ein Internet-basiertes System unter Verwendung eines heimischen stationären Endgeräts, insbesondere eines Personal Computers und einer "voting" Smart Card beschrieben. Diese "voting" Smart Card muss vor der Wahl an die entsprechenden Wahlberechtigten ausgeteilt werden. Auch die nötige Infrastruktur in den stationären Endgeräten, auch als Hosts bezeichnet, oder den entfernten Servern zum "eVoting" ist derzeit nicht vorhanden und muss aufgebaut werden. Zur Sicherung der Anonymität ist die Nutzung verschiedener stationärer Hosts während der Registrierung und der Stimmabgabe notwendig, was nicht praxistauglich ist, da der Unterschied zur klassischen Urnenwahl nicht mehr vorhanden ist. Durch die Nutzung blinder Signaturen in dem beschriebenen Verfahren werden sehr viele Zusatzschritte notwendig, wodurch das Verfahren sehr komplex wird.

In der Publikation ""eVoting with the European Citizen Card" von Frau Gisela Meister et al., welche im Rahmen der Konferenz Biosig 2008 vorgetragen wurde, wird ebenfalls ein "e-Voting" Verfahren beschrieben. Dabei wird ebenfalls ein hohes Maß an Anonymität, Manipulationssicherheit und Transparenz für den Wahlberechtigten erzielt. Bei dieser Publikation ist die Wahl ebenfalls von einer elektronischen ID-Karte mit den bereits beschriebenen Nachteilen abhängig. Dabei sind Anpassungen an die Karten-Algorithmen notwendig, die zu Problemen mit der bestehenden Krypto- Infrastruktur anderer Länder führen können. Im Vorfeld der Wahl könnten unter Umständen mehr persönliche Daten ausgetauscht, als notwendig. Durch die Nutzung der ECC-Card bei Stimmabgabe werden auch persönliche Daten mit übertragen. Diese müssen vor der Stimmauswertung entsprechend entfernt und anonymisiert werden, wodurch ein Wahlberechtigter ein hohes Maß an Grundvertrauen in ein derartiges Wahlsystem mitbringen muss, wenn er von einer anonymen Wahl ausgehen möchte. Weiterhin muss der Wähler ein, während des Wahlvorgangs einem sogenannten Trustcenter mitgeteiltes, Geheimnis übertragen. Mit dem Geheimnis kann unter Umständen anschließend auf den Wähler geschlossen werden.

Die soeben beschriebenen Verfahren erlauben darüber hinaus nur in beschränktem Maß eine ortsunabhängige Abstimmung. Zur Verbesserung der örtlichen Unabhängigkeit wird in der US 2008/105742-A1 ein Verfahren für "eVoting" vorgestellt, durch welches der Wahlberechtigte über ein Mobilfunknetz elektronisch abstimmen kann. Dabei ist es dem einzelnen Wahlberechtigten nicht möglich, die Anonymität der Stimmabgabe für sich selbst zu überprüfen, beispielsweise durch Mitlesen der empfangenen oder gesendeten Daten. Der "mobile communication server" entfernt im Schritt S930 die persönlichen Daten des Wählers von der Stimme. Auch hier muss der Wähler dem Netzwerkbetreiber uneingeschränkt vertrauen, was für eine geheime und anonyme Wahl inakzeptabel ist. Darüber hinaus setzt das Verfahren eine PKI Schlüsselinfrastruktur voraus.

Der Erfindung liegt daher die Aufgabe zugrunde, ein Verfahren zum Abstimmen in Mobilfunknetzen zu beschreiben, welches einfach, ortsunabhängig, vertrauenswürdig und anonym ist. Es ist notwendig eine Lösung bereitzustellen, die sofort und ohne größeren technischen Aufwand umsetzbar ist. Insbesondere sollen bestehende Infrastrukturen, genutzt werden.

Die Aufgabe der Erfindung wird durch die in den nebengeordneten unabhängigen Patentansprüchen beschriebenen Maßnahmen gelöst. Vorteilhafte Ausgestaltungen sind in den jeweils abhängigen Ansprüchen beschrieben.

Insbesondere wird die Aufgabe durch ein Verfahren zum elektronischen Abstimmen über ein Mobilfunknetz in einer vertrauenswürdigen Instanz in einem mobilen Endgerät eines Wahlberechtigten gelöst. Dabei empfängt die vertrauenswürdige Instanz einen Identitätsnachweis des Wahlberechtigten durch die Eingabe einer persönlichen Identifikationsnummer durch den Wahlberechtigten auf dem mobilen Endgerät. Anschließend sendet die vertrauenswürdige Instanz die persönliche Identifikationsnummer über das Mobilfunknetz an eine Wahlinstanz zum Überprüfen der Berechtigung des Wahlberechtigten für das elektronische Abstimmen. Anschließend empfängt die vertrauenswürdige Instanz einen elektronischen Wahlschlüssel von der Wahlinstanz über das Mobilfunknetz nach der Überprüfung der Berechtigung, wobei der Wahlschlüssel für alle Wahlberechtigten zumindest einer Region gleich ist. Nun empfängt die vertrauenswürdige Instanz eine Abstimminformation des Wahlberechtigten und erzeugt weiterhin eine Zufallszahl. Die Abstimminformation mit der Zufallszahl werden mit dem Wahlschlüssel durch die vertrauenswürdige Instanz verschlüsselt und die verschlüsselte Abstimminformation mit Zufallszahl wird von der vertrauenswürdigen Instanz über das Mobilfunknetz an die Wahlinstanz mittels eines verbindungslosen Netzwerkprotokolls versendet.

Als eine vertrauenswürdige Instanz wird in dieser Anmeldung vorzugsweise ein Datenträger mit entsprechenden Sicherheitsfunktionalitäten, wie z.B. Smart Cards, Chipkarten, Token, Massenspeicherkarten, Multimediakarte und/oder SIM-Karten. Bevorzugt wird die SIM als vertrauenswürdige Instanz angesehen, da diese in der heutigen Infrastruktur im mobilen Endgerät des Wahlberechtigten enthalten ist. Alternativ ist die vertrauenswürdige Instanz ein sicherer Teil eines Betriebsystems, auch als Trusted Base bezeichnet. Alternativ ist die vertrauenswürdige Instanz eine sichere Hardwareumgebung im mobilen Endgerät selbst, beispielsweise eine sichere µSD Karte.

Als ein mobiles Endgerät wird ein Endgerät bezeichnet, welches vorrangig in einem Mobilfunknetzwerk kommuniziert. Darunter sind insbesondere Mobilfunktelefone, PDA, Blackberry oder Smart Phones zu verstehen. Diese Endgeräte können auf einfache Weise transportiert werden und dienen der ortsunabhängigen Kommunikation.

Eine persönliche Identifikationsnummer, kurz PIN, gemäß der Erfindung ist eine Nummer, die dem Wahlberechtigten postal oder elektronisch mitgeteilt worden ist und die den Wahlberechtigten am Verfahren eindeutig identifiziert.

Darüber hinaus können weitere Identifizierungen stattfinden, beispielsweise mittels elektronischer Identitätsdokumente, wie einem elektronischen Personalausweis, einem elektronischen Reisepass mit, auf einem Chip gespeicherten maschinenlesbaren Identifikationsdaten des Wahlberechtigten.

Mit Region ist ein topografisch begrenztes Gebiet gemeint, welches beispielsweise einem Wahlkreis bei Urnenwahl entspricht. Theoretisch könnte auch an alle Wahlberechtigten der Abstimmung der gleiche Wahlschlüssel ausgehändigt werden.

Als eine Wahlinstanz wird gemäß dieser Anmeldung vorzugsweise ein, vom mobilen Endgerät entfernter Server verstanden, der verschiedene Aufgaben/ Anwendungen bereitstellt bzw. erfüllt, sie im späteren Verlauf erläutert werden. Er steht in Kommunikation über das Mobilfunknetz mit dem mobilen Endgerät und der vertrauenswürdigen Instanz.

Als eine Kommunikation wird eine Signalübertragung, eine wechselseitige Steuerung und in einfachen Fällen auch eine Verbindung von/zwischen technischen Geräten bzw. Instanzen verstanden. In der Informationstheorie wird eine Kommunikation unter anderem durch das Sender-Empfänger-Modell geprägt: Informationen werden in Zeichen kodiert und dann von einem Sender über einen Übertragungskanal an einen Empfänger übertragen. Dabei ist entscheidend, dass Sender und Empfänger dieselbe Kodierung verwenden, damit der Empfänger die Nachricht versteht d.h. die zu übertragene Information dekodieren kann. In der Informationstheorie geht die Kommunikation auch über das syntaktische Sender-Empfänger-Modell hinaus: Die Bedeutung und der Informationsgehalt der Kommunikation sind immer von dem semantischen Kontext einer Übertragung abhängig.

Die Kommunikation zwischen der vertrauenswürdigen Instanz bzw. dem mobilen Endgerät und der Wahlinstanz wird vorzugsweise über Over the Air - Kommunikation, kurz OTA, gemäß den GSM/UMTS-Spezifikationen durchgeführt. Alternativ erfolgt die Kommunikation beispielsweise mit dem SCWS-Admin-Protokoll.

Das Verfahren ist für eine politische Abstimmung geeignet, jedoch nicht darauf beschränkt. Vielmehr ist es möglich, mittels dieses Verfahrens auf eine einfache Art und Weise mit Hilfe einer vertrauenswürdigen Instanz, insbesondere der SIM eines jeden mobilen Endgeräts eine anonyme und fälschungssichere Möglichkeit für jede Art von Abstimmungen zu schaffen. Diese Abstimmungen könnten auch für Internetplattformen, wie sozialen Netzwerken oder Meinungsforschungsinstituten verwendet werden.

Durch Verwendung eines verbindungslosen Netzwerkprotokolls zum Versenden der verschlüsselten Abstimminformation und Zufallszahl, ist sichergestellt, dass die Wahlinstanz keine wahlberechtigtenbezogenen Informationen, beispielsweise die IP-Adresse, erhält, sodass das Abstimmen anonym bleibt. Darüber hinaus wird durch die Zufallszahl sichergestellt, dass die Stimme nur einmalig in den Wahlunterlagen erfasst wird.

Durch das hierin beschriebene Verfahren sind keine zusätzlichen "voting" Smart Cards notwendig, die für einen Wahlberechtigten ausgeteilt werden müssten. Auch elektronische Identitätsdokumente, wie eID oder ePass sind nicht grundsätzlich erforderlich, obwohl sie als weitere Identitätsnachweise herangebracht werden könnten. Dadurch ist das Verfahren für beliebige Abstimmungsverfahren, nicht nur offizielle Wahlen, einsetzbar. Es ist prinzipiell keine aufwendige PKI-Infrastruktur im Vorfeld der Abstimmung aufzubauen, da die notwendigen Schlüssel im Verfahren selbst generiert und verteilt werden. Das Verfahren ist nicht endgeräteabhängig und funktioniert prinzipiell auch auf einfachen mobilen Endgeräten. Wahlbetrug ist nachprüfbar. Die Vertrauenswürdigkeit und Anonymität des Verfahrens ist öffentlich nachprüfbar. Eine detaillierte Analyse bezüglich der Anonymität erfolgt in der Figurenbeschreibung.

Bevorzugt wird ein Hashwert der persönlichen Identifikationsnummer in der vertrauenswürdigen Instanz gebildet und dieser Hashwert mit einem privaten Schlüsselteils eines kryptografischen Schlüsselpaars der vertrauenswürdigen Instanz verschlüsselt. Der öffentliche Schlüsselteil des kryptografischen Schlüsselpaars ist dabei der Wahlinstanz bekannt. In der Wahlinstanz wird nun erneut ein Hashwert über die persönliche Identifikationsnummer gebildet und der verschlüsselte Hashwert von der Wahlinstanz entschlüsselt. Abschließend wird der entschlüsselte Hashwert mit dem erneut bebildeten Hashwert verglichen und bei Übereinstimmung wird die Berechtigung des Wahlberechtigten bestätigt. Somit können ungültige persönliche Identifikationsnummern leicht gefunden werden und Stimmabgaben Wahlunberechtigter verhindert werden.

Bevorzugt ist der Wahlschlüssel ein symmetrischer oder asymmetrischer Wahlschlüssel ist. Weiterhin ist der Wahlschlüssel ausschließlich von den vertrauenswürdigen Instanzen von Wahlberechtigten empfangbar. Der Wahlschlüssel sollte somit bis zum Ende der Abstimmung der Öffentlichkeit nicht bekannt sein, da dieser Wahlschlüssel zum Verschlüsseln der Abstimminformation mit Zufallszahl vorgesehen ist. Sobald ein derartig verschlüsselter Datensatz bei der Wahlinstanz mittels verbindungslosem Netzwerkprotokoll , zum Beispiel dem User Datagram Protocol,kurz UDP oder dem Real-Time-Transport Protocol, kurz RTP eingegangen ist, wird er von der Wahlinstanz ausgewertet und für die Abstimmung gezählt.

Insbesondere ist der Wahlschlüssel kryptografisch mit einem öffentlichen Schlüsselteil eines kryptografischen Schlüsselpaars der vertrauenswürdigen Instanz verschlüsselt und so in der vertrauenswürdigen Instanz empfangen worden. Dies erhöht die Manipulationssicherheit des Verfahrens.

Bevorzugt entschlüsselt die vertrauenswürdige Instanz den Wahlschlüssel mit einem privaten Schlüsselteil eines kryptografischen Schlüsselpaars der vertrauenswürdigen Instanz und überprüft die Signatur des Wahlschlüssels mit dem öffentlichen Schlüsselteil des kryptografischen Schlüsselpaars der Wahlinstanz.

Bevorzugt erfolgt das Senden der verschlüsselten Abstimminformation mit der Zufallszahl von der vertrauenswürdigen Instanz mehrfach, beispielsweise fünfmal. Da bei verbindungslosen Netzwerkprotokollen die vertrauenswürdige Instanz keine Empfangsbestätigung erhält, ist somit sichergestellt, dass die verschlüsselte Abstimminformation mit der Zufallszahl von der Wahlinstanz empfangen wird. Abstimminformationen mit derselben Zufallszahl werden in der Wahlinstanz einfach verworfen.

Insbesondere bestätigt die vertrauenswürdige Instanz dem Wahlberechtigten das Senden der verschlüsselten Abstimminformation und der Zufallszahl. Zusätzlich verhindert die vertrauenswürdige Instanz das Versenden einer weiteren Abstimminformation mit einer neu generierten Zufallszahl des gleichen Wahlberechtigten. Somit ist die Wahl manipulationssicherer.

Bevorzugt können verschiedene Wahlberechtigte mittels derselben vertrauenswürdigen Instanz aber unterschiedlicher persönlicher Identifikationsnummern elektronisch abstimmen.

Die Aufgabe der Erfindung wird ebenfalls durch ein Verfahren zum elektronischen Abstimmen über ein Mobilfunknetz in einer Wahlinstanz gelöst. Hierbei empfängt die Wahlinstanz einen Identitätsnachweis des Wahlberechtigten in Form einer persönlichen Identifikationsnummer von der vertrauenswürdigen Instanz eines mobilen Endgeräts über das Mobilfunknetz zum Überprüfen der Berechtigung des Wahlberechtigten für das elektronische Abstimmen. Anschließend erfolgt das Überprüfen der Teilnahmeberechtigung des Wahlberechtigten an dem elektronischen Abstimmverfahren durch die Wahlinstanz. Weiterhin sendet die Wahlinstanz einen elektronischen Wahlschlüssel über das Mobilfunknetz an die vertrauenswürdige Instanz, wenn der Wahlberechtigte am elektronischen Abstimmverfahren teilnehmen darf, wobei der Wahlschlüssel für alle Wahlberechtigten zumindest einer Region gleich ist. Die Wahlinstanz empfängt eine verschlüsselte Abstimminformation mit Zufallszahl von der vertrauenswürdigen Instanz über das Mobilfunknetz in der Wahlinstanz mittels eines verbindungslosen Netzwerkprotokolls und entschlüsselt die verschlüsselte Abstimminformation mit Zufallszahl. Schließlich wird die Wahlinstanz alle Abstimminformationen mit unterschiedlicher Zufallszahl auswerten.

Bevorzugt sendet die Wahlinstanz, insbesondere eine Appletinstanz der Wahlinstanz, ein Wahlapplet an die vertrauenswürdige Instanz auf Anfrage von der vertrauenswürdigen Instanz. Mit diesem Senden wird auch ein öffentlicher Schlüsselteil der Wahlinstanz gesendet.

Als Wahlapplet ist insbesondere ein SIM-Toolkit - Applet verstanden, welches vor der eigentlichen Abstimmung dem Wahlberechtigten über beispielsweise OTA zur Verfügung gestellt wird und während der Abstimmung die Kommunikation mit der Wahlinstanz und dem Wahlberechtigten verwaltet. Das Wahlapplet wird in der Figurenbeschreibung näher erläutert.

Insbesondere liegen der Wahlinstanz, insbesondere einer Registrierungsinstanz der Wahlinstanz, die öffentlichen Schlüsselteile aller vertrauenswürdigen Instanzen der mobilen Endgeräte der Wahlberechtigten vor. Das Überprüfen der Teilnahmeberechtigung erfolgt durch das Empfangen der persönlichen Identifikationsnummer, wobei die Identifikationsnummer mit einem privaten Schlüsselteil eines Schlüsselpaars der vertrauenswürdigen Instanz signiert ist. Die Wahlinstanz vergleicht diese Signatur der persönlichen Identifikationsnummer mit den Signaturen aller öffentlichen Schlüsselteile der vertrauenswürdigen Instanzen. Sobald irgendeine Signatur der öffentlichen Schlüsselteile der kryptografischen Schlüsselpaare mit der Signatur der persönlichen Identifikationsnummer übereinstimmt, wird der Wahlschlüssel übertragen. Die Übereinstimmung ist sicherlich der rechenintensivste Schritt des Verfahrens der mittels "Cloud Computing" vollzogen werden kann. Somit wird dieser Schritt beliebig ausgelagert. Dies ist notwendig, damit der öffentliche Schlüssel der vertrauenswürdigen Instanz nicht mit einem Wahlberechtigten in Verbindung steht und somit ein Ausprobieren aller vorliegenden öffentlichen Schlüssel notwendig ist.

Insbesondere erfolgt ein Registrieren der persönlichen Identifikationsnummer in der Wahlinstanz, insbesondere der Registrierungsinstanz, nach Wahlschlüsselempfangsbestätigung der vertrauenswürdigen Instanz in der Form, dass ein weiteres Anfordern eines Wahlschlüssels durch die vertrauenswürdige Instanz erfolglos bleibt. Dies erhöht die Manipulationssicherheit des Verfahrens.

Im Erfindungsgedanken ist nicht nur das Abstimmverfahren selbst, sondern ein wesentlicher Teil der Erfindung des Abstimmverfahrens geschieht vor der eigentlichen Abstimmung. Daher ist weiterhin ein Verfahren zum Registrieren eines Wahlberechtigten an einem Verfahren zum elektronischen Abstimmen über ein Mobilfunknetz vor der Abstimmung beschrieben. Dazu wird ein Wahlapplet von einer Wahlinstanz, insbesondere einer Appletinstanz, über das Mobilfunknetz an eine vertrauenswürdige Instanz in einem mobilen Endgerät eines Wahlberechtigten übertragen. Anschließend wird ein öffentlicher und ein privater Schlüsselteil eines kryptografischen Schlüsselpaars durch die vertrauenswürdige Instanz im mobilen Endgerät des Wahlberechtigten erzeugt, wobei das Schlüsselpaar der vertrauenswürdigen Instanz (aber nur der vertrauenswürdigen Instanz und nicht dem Wahlberechtigten) eindeutig zugeordnet ist. Abschließend wird der öffentliche Schlüsselteil des kryptografischen Schlüsselpaars an die Wahlinstanz, insbesondere die Registrierungsinstanz übertragen.

Bevorzugt wird das Wahlapplet unverschlüsselt und signiert übertragen. Auch der öffentliche Schlüsselteil des kryptografischen Schlüsselpaars wird unverschlüsselt und signiert übertragen.

Nachfolgend wird anhand von Figuren die Erfindung bzw. weitere Ausführungsformen und Vorteile der Erfindung näher erläutert, wobei die Figuren lediglich Ausführungsbeispiele der Erfindung beschreiben. Gleiche Bestandteile in den Figuren werden mit gleichen Bezugszeichen versehen. Die Figuren sind nicht als maßstabsgetreu anzusehen, es können einzelne Elemente der Figuren übertrieben groß bzw. übertrieben vereinfacht dargestellt sein.

Es zeigen:
- Figur 1: Ein Ablaufdiagramm eines erfindungsgemäßen Verfahrens zum Registrieren eines Wahlberechtigten an einem Verfahren zum elektronischen Abstimmen;
- Figur 2: Ein Ablaufdiagramm eines erfindungsgemäßen Verfahrens zum elektronischen Abstimmen;
- Figur 3: Ein mobiles Endgerät mit einer vertrauenswürdigen Instanz und einem erfindungsgemäßen Wahlapplet.

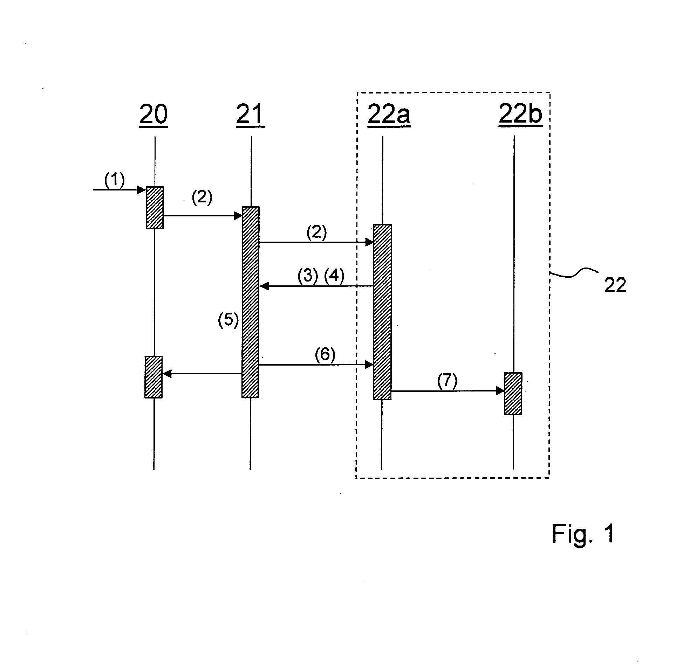

Figur 1 zeigt das erfindungsgemäße Verfahren zum Registrieren des Wahlberechtigten 20 an der elektronischen Abstimmung. Dies geschieht logischerweise vor der eigentlichen elektronischen Abstimmung, wobei der Zeitrahmen für die Registrierung prinzipiell frei wählbar ist. Im Folgenden werden die einzelnen Schritte ausführlich beschrieben.

### Schritt 1 - Wahlunterlagen zum Abstimmen via Mobilfunknetz 25:

Diese Unterlagen werden vom Wahlberechtigten 20 äquivalent zu den Briefwahlunterlagen beantragt, d.h. mit der postalen Wahlbenachrichtigung wird auch ein Antrag auf elektronische Abstimmen über Mobilfunknetz 25 versendet. Aufgrund der heutigen Wahlorganisation für politische Wahlen ist dies erforderlich, um eine doppelte Stimmabgabe im Wahllokal und per mobiles Endgerät 23 zu vermeiden.

Mit den Wahlunterlagen zum elektronischen Abstimmen via Mobilfunknetz 25 wird dem Wahlberechtigten 20 eine persönliche Identifikationsnummer des Wahlberechtigten 20, kurz PIN, mitgeteilt. Diese PIN ist vorzugsweise 16 Stellen lang. Alternativ kann die PIN auch deutlich kürzer sein, beispielsweise vierstellig und ein zusätzlicher Nachweis der persönlichen Identität gefordert werden. Dieser zusätzliche Nachweis erfolgt dann mittels eines elektronischen Ausweisdokuments, insbesondere einem eID oder einem ePass.

### Schritt 2 - Wahlapplet 24 anfordern:

In den Wahlunterlagen zum Abstimmen via Mobilfunknetz 25 befindet sich auch eine Telefonnummer für eine Kurzmitteilung, SMS. Schickt der Wahlberechtigte 20 eine SMS mit seinem mobilen Endgerät 23, ggf. mit einem bestimmten Schlüsselwort, an diese Telefonnummer, wird damit ein OTA-Download des Wahlapplets 24 auf das SMS-sendende mobile Endgerät 23 gestartet.

Das Wahlapplet 24 ist für eine vertrauenswürdige Instanz 21. In den folgenden Beispielen ist die vertrauenswürdige Instanz 21 eine SIM-Karte. Darauf ist die Anmeldung aber nicht beschränkt, insbesondere kann eine Hardware-Instanz des mobilen Endgeräts 23 eine vertrauenswürdige Instanz 21 sein oder eine Software-Instanz, zum Beispiel eine Trusted Base ist die vertrauenswürdige Instanz 21. In dem Ausführungsbeispiel ist das Wahlapplet 24 ein Java-Applet für Java-SIM Karten. Dieses Applet 24 stellt sowohl den elektronischen Stimmzettel als auch die nachfolgend beschriebenen Funktionen zur Verfügung.

Der Stimmzettel wird entweder via SIM Toolkit oder mittels Smart Card Webserver, kurz SCWS auf dem Mobile dargestellt. Dies ist abhängig von dem jeweiligen mobilen Endgerät 23 bzw. der vertrauenswürdigen Instanz 21, auf dem das Applet 24 gestartet wird.

Der Quelltext des Wahlapplets 24 wird offengelegt, dies kann bereits vor der Abstimmung geschehen. Dadurch können sich beliebige Fachleute stellvertretend für die Öffentlichkeit davon überzeugen, dass ein Ausspionieren des Wahlberechtigten 20 nicht erfolgt.

### Schritt 3 - Download des Wahlapplets 24 via OTA:

Das Wahlapplet 24 wird via OTA auf das SIM geladen. Dies geschieht durch die Wahlinstanz 22. Die Wahlinstanz ist hierbei ein entfernter Server. Die Wahlinstanz 22 ist bevorzugt in Unterinstanzen gegliedert, kann aber auch als ein Server aufgebaut sein. Im Ausführungsbeispiel wird das Wahlapplet 24 von einer Appletinstanz 22a, einen Appletserver, bereitgestellt. Hierbei ist zu beachten, dass die Appletübertragung zwischen SIM und Appletserver signiert aber nicht verschlüsselt erfolgt. Die Signatur kann entweder mit einem geheimen symmetrischen Schlüssel des OTA-Dienstleisters oder mittels eines privaten Schlüssels einer zertifizierten öffentlichen Stelle erfolgen.

Wichtig ist, dass das übertragene Applet 24 öffentlich mitgehört und ausgewertet werden kann. So kann die Öffentlichkeit sicherstellen, dass wirklich nur der Bytecode des Wahlapplets 24 auf das mobile Endgerät 23 und respektive die vertrauenswürdige Instanz 21 geladen wird. Das Wahlapplet 24 ist für alle Wahlberechtigten 20 gleich, kein Wahlberechtigter 20 erhält ein irgendwie personalisierten Wahlapplet 24. Die Öffentlichkeit kann nun beliebige Appletübertragungen vergleichen, um zu überprüfen, dass alle mobilen Endgeräte 23 und respektive alle vertrauenswürdigen Instanzen 21 das gleiche Applet 24 erhalten.

### Schritt 4 - Download des öffentlichen Schlüssels der Wahlinstanz 22 bzw. der Registrierungsinstanz 22b:

Zusammen mit dem Wahlapplet 24 wird vom Appletserver 22a via OTA auch der öffentliche Schlüssel der Wahlinstanz 22 auf das SIM übertragen. Im Ausführungsbeispiel übernimmt diese Funktion die Registrierungsinstanz 22b, auch als Registrierungsserver 22b bezeichnet. Auch diese Schlüsselübertragung ist zum Zweck der öffentlichen Kontrolle nur signiert und nicht selbst verschlüsselt. Dabei kann dieselbe Signatur wie in Schritt 3 verwendet werden. Auch ist es möglich, dass der öffentliche Schlüssel des Registrierungsservers 22b bereits Bestandteil des Applets 24 ist, also bereits in Schritt 3 mit übertragen wird.

### Schritt 5 - Erzeugen eines kryptografischen Schlüsselpaars der vertrauenswürdigen Instanz 21:

Das SIM erzeugt nun ein privat-öffentliches kryptografisches Schlüsselpaar. Dieses Schlüsselpaar wird auch als Private-Public Key bezeichnet. Die Begriffe SIM-Schlüssel SIM-Keys werden synonym verwendet. Dieses Paar ist jedoch nicht dem Wahlberechtigten 20 zugeordnet, sondern nur dem SIM. Deshalb wird es im Folgenden als "SIM-Schlüsselpaar" bezeichnet. Es stellt sicher, dass der Wahlschlüssel, der später zur Stimmabgabe verwendet wird, auch wirklich an eine vertrauenswürdige Instanz gesendet wird.

### Schritt 6 - Upload des SIM-Schlüssels via OTA:

Der öffentliche Teil des erzeugten SIM-Schlüssels wird gemäß Schritt 3 signiert und ebenfalls nicht verschlüsselt. Auf diese Art und Weise kann die Öffentlichkeit von den übertragenen Daten Kenntnis nehmen. Ist die Signatur des öffentlichen SIM-Schlüssels korrekt, wird mit Schritt 7 fortgefahren.

### Schritt 7 - Weitergabe des öffentlichen SIM-Schlüssels an die Wahlinstanz 22 bzw. den Registrierungsserver 22b:

Der vom Applet-Server 22a erhaltene SIM-Schlüssel wird an den Registrierungsserver 22b übertragen.

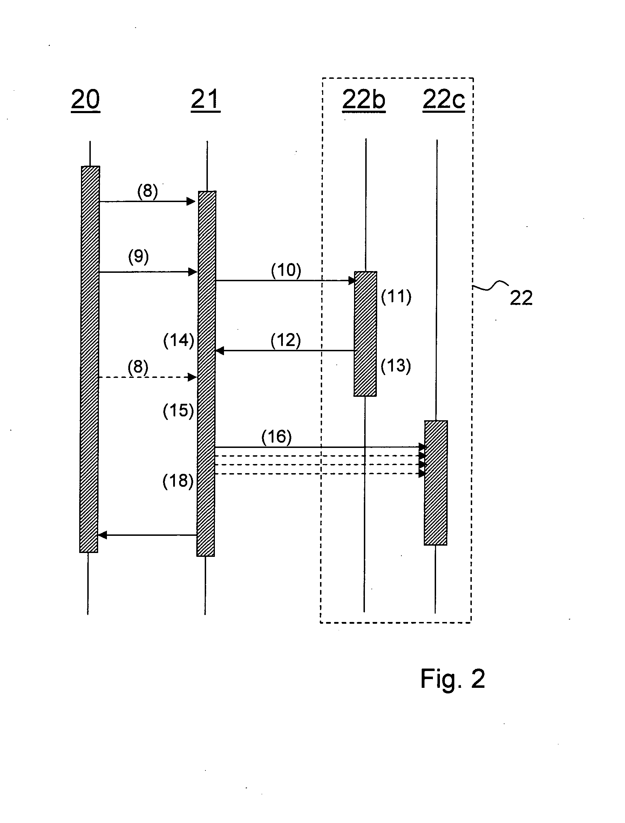

In Figur 2 ist nun ein erfindungsgemäßes Ausführungsbeispiel eines Verfahrens zum elektronischen Abstimmen beschrieben. Die Stimmabgabe selbst kann wie bei der klassischen Stimmabgabe zu den Öffnungszeiten der Wahllokale am Wahltag oder wie bei der Briefwahl auch bereits vorher erfolgen.

### Schritt 8 - Stimminformationen eingeben:

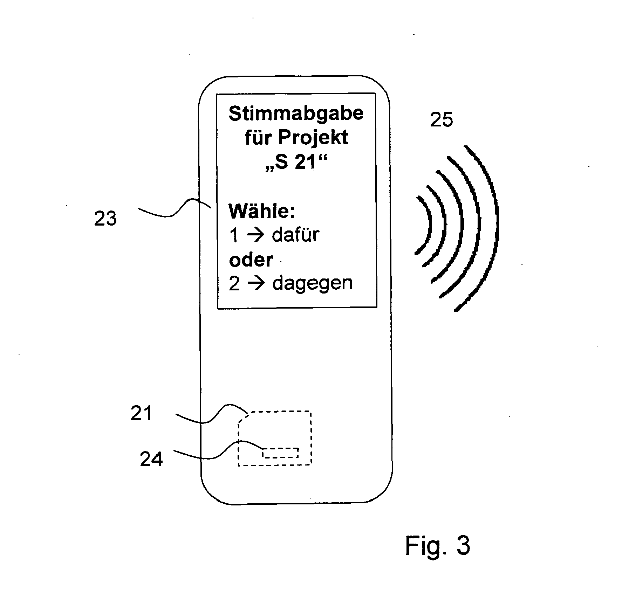

Dieser Schritt kann nun alternativ auch erst zwischen Schritt 14 oder 15 erfolgen. Der Wahlberechtigte 20 startet das Wahlapplet 24 und nutzt die davon zur Verfügung gestellte Oberfläche, siehe auch Figur 3, um seine Stimme oder seine Stimmen zu verteilen. Wie dies im Hinblick auf Nutzerinteraktion geschieht, ist von der jeweiligen Wahl und auch vom mobilen Endgerät 23 bzw. der vertrauenswürdigen Instanz 21 abhängig. Eine Kommunalwahl wird deutlich anders dargestellt sein als eine Ja/Nein- Volksabstimmung.

### Schritt 9 - Identitätsnachweis durch PIN Eingabe des Wahlberechtigten 20: Sind die Stimmen verteilt, bestätigt dies der Wahlberechtigten 20 entsprechend. Anschließend muss er seine PIN angeben, die er gemäß Schritt 1 erhalten hat, um sich als Wahlberechtigter 20 zu identifizieren.

Optional ist es zusammen mit Schritt 10 möglich, hier weitere Identifizierungsmerkmale einzubringen. Dies kann beispielsweise die Identifizierung mittels ePass sein, der über eine NFC-Schnittstelle des mobilen Endgeräts 23 mit dem Wahlapplet 24 kommuniziert. Auch könnte das mobile Endgerät 23 über eine drahtgebundene Schnittstelle - ggf. indirekt über ein stationäres Endgerät, insbesondere ein PC - mit einem geeigneten Kartenleser verbunden werden.

### Schritt 10 - Identifizierung des Wahlberechtigten 20 gegenüber Wahlinstanz 22 durch PIN:

Das Wahlapplet 24 sendet nun die PIN und ggf. weitere Identifikationsmerkmale des Wahlberechtigten 20 an den Registrierungsserver 22b. Die PIN ist dabei wieder nur signiert, diesmal mit dem privaten Schlüssel des SIM-Schlüssels, siehe Schritt 5. Dazu wird ein Hashwert über die PIN gebildet und mit dem privaten Schlüssel des SIM-Schlüssels verschlüsselt. Somit ist auch für den Wahlberechtigten 20 selbst ersichtlich, dass nur die PIN an den Registrierungsserver 22b gesendet wurde.

Der Registrierungsserver 22b dient dazu, die Stimmabgabe zu protokollieren. Dazu erfasst er, dass der Wahlberechtigte 20 mit seiner PIN X prinzipiell wählen darf. Weiterhin wird nun die PIN X des Wahlberechtigten 20 registriert, sodass festgehalten wird, dass der Wahlberechtigte 20 gewählt hat. Der Registrierungsserver 22b erfüllt somit in etwa die Funktion des Wahlvorstandes bei der klassischen Wahl im Wahllokal und es werden unzulässige und mehrfache Stimmabgaben verhindert. Der Vorteil bei der Aufteilung der Wahlinstanz 22 in die Instanzen 22a, 22b und 22c wird nun ersichtlich, da bei Aufteilung der Instanz 22, die Registrierungsinstanz 22b keine Informationen über die vergebenen Stimmen des Wahlberechtigten 20 erhalten würde. Allerdings könnte bei Verwendung eines einzelnen Servers als Wahlinstanz 22 auch mittels geeigneter Softwaremechanismen sichergestellt werden, dass die Registrierung der Wahlberechtigten 20 nicht mit den abgegebenen Stimmen in Zusammenhang gebracht werden können.

### Schritt 11 - Prüfung der PIN im Registrierungsserver 22b:

Der Registrierungsserver 22b prüft nun, ob die erhaltene PIN und ggf. weitere Identifikationsmerkmale des Wahlberechtigten 20 gültig sind. Prinzipiell geht der Registrierungsserver 22b wie folgt vor: Der Registrierungsserver 22b entschlüsselt mit Hilfe des Public Key des SIM, der im Schritt 6 und 7, dem Registrierungsserver 22b übertragen wurde, den Hashwert der PIN. Zusätzlich errechnet die Registrierungsinstanz 22b, den Hashwert erneut über die PIN. Der erneut berechnete Hashwert und der entschlüsselte Hashwert werden verglichen und bei Übereinstimmung gilt der Wahlberechtigte 20 als berechtigt zur Teilnahme an der Wahl.

Da der Public Key des SIM nicht mit dem Wahlberechtigten 20 in Verbindung steht, ist hier ein "Ausprobieren" der vorliegenden Public Keys der SIM aller Wahlberechtigten 20 notwenig. Dazu berechnet der Registrierungsserver 22b den Hashwert über die angekommene PIN. Anhand der dem Registrierungsserver 22b vorliegenden SIM Public Keys aller Wahlberechtigten 20 wird nun der angekommene verschlüsselte Hashwert über die PIN dadurch entschlüsselt, dass alle Schlüssel so lange durchprobiert werden, bis der verschlüsselte Hashwert entschlüsselt werden kann. Dies ist heutzutage mit Hilfe von Cloud Computing kein großes Hindernis. Die Operation kann beliebig ausgelagert werden, da sie weder sicherheitskritisch noch datenschutzgefährdend ist. Es wird schließlich nur ein Hashwert mit Hilfe eines Public Key entschlüsselt.

Optional kann die Suche nach dem richtigen Public Key über den IP-Adresspool beginnen, über den das Wahlapplet 24 angefordert wurde. Dabei wurde das Wahlapplet 24 beispielsweise über das Mobilfunknetz 25 eines bestimmten Netzwerkbetreibers angefordert. Wird nun eine PIN ebenfalls über dieses Mobilfunknetz 25 des bestimmten Netzwerkbetreibers in der Wahlinstanz 22 erhalten, werden zunächst alle verfügbaren öffentlichen SIM-Schlüssel von diesem Netzwerkbetreiber ausprobiert.

### Schritt 12 - Versenden des Wahlschlüssels an das SIM:

Ist ein passender öffentlicher SIM-Schlüssel gefunden, steht fest, dass die PIN von einem SIM kam.

Somit wird nun der Wahlschlüssel von der Wahlinstanz 22b versendet. Mit dem Wahlschlüssel wird die Abstimminformation verschlüsselt, siehe Schritt 15. Dieser Wahlschlüssel kann sowohl symmetrisch als auch asymmetrisch sein. Vorzugsweise ist der Schlüssel asymmetrisch, damit eine Entschlüsselung der abgegebenen Abstimminformation nur der Wahlinstanz 22, insbesondere der Stimmauswertinstanz 22c möglich ist. Trotzdem ist der an das SIM gesendete Teil des Wahlschlüssels nicht als "Public Key" zu bezeichnen, da er zumindest bis zum Ende der Stimmabgabe nicht der Öffentlichkeit zugänglich sein darf. Wäre der Teil der Öffentlichkeit zugänglich, könnte jede beliebige Person eine Abstimminformation verschlüsseln und an die Wahlinstanz 22 senden.

Der Wahlschlüssel kann für alle Wahlberechtigten 20 identisch sein. Es genügt, wenn eine genügend große Anzahl von Wahlberechtigten 20 denselben Wahlschlüssel erhält, so dass ein statistischer Rückschluss auf das Wahlverhalten des einzelnen Wahlberechtigten 20 nicht mehr möglich ist. Vorzugsweise wird ein Wahlschlüssel an eine Region, zum Beispiel pro Wahlkreis oder ähnlicher Organisationseinheit ausgegeben. Eine Zuordnung des Wahlschlüssels auf Wahlkreise ist möglich, da der Wahlberechtigten 20 bereits identifiziert wurde, siehe Schritte 10 und 11.

Der Wahlschlüssel wird mit dem öffentlichen SIM-Schlüssel an das SIM geschickt.
Optional wird er noch mit einem privaten Schlüssel des Registrierungsservers 22b verschlüsselt oder zumindest signiert, um ein höheres Maß an Sicherheit zu erhalten. Durch ein Entschlüsseln oder entsprechendes Nachprüfen der Signatur durch die vertrauenswürdige Instanz 21 kann der Wahlberechtigte 20 feststellen, dass der Wahlschlüssel vom Registrierungsserver 22b versendet wurde. Um nun sicher zu stellen, dass der Wahlschlüssel nur von derjenigen vertrauenswürdigen Instanz 21 entschlüsselt werden kann, die den Wahlschlüssel angefordert hat, wird er mit dem Public-Key der vertrauenswürdigen Instanz 21 verschlüsselt. Das Versenden des Wahlschlüssels umfasst somit die Schritte: Signieren oder Verschlüsseln des Wahlschlüssel mit dem private Key des Registrierungsservers 22b; Verschlüsseln des signierten bzw. verschlüsselten Wahlschlüssels mit dem public-Key der SIM 21 und anschließend Übertragen des verschlüsselten bzw. signierten Wahlschlüssels an das SIM 21. Der übertragene Wahlschlüssel ist somit einmal signiert (mit dem Private-key des Registrierungsservers 22b) und einmal verschlüsselt (mit dem Public-Key des SIM 21). Alternativ ist der übertragene Wahlschlüssel zweimal verschlüsselt (mit dem Public-Key des SIM 21 und dem Private-Key des Registrierungsserver 22b).

In dem SIM 21 wird der empfangene Wahlschlüssel mit dem private-Key des SIM 21 entschlüsselt. Anschließend wird der Wahlschlüssel mit einem öffentlichen Schlüssel des Registrierungsservers 22b entschlüsselt bzw. die Signatur nachgeprüft.

### Schritt 13 - Wähler als "hat gewählt" markieren:

Sobald vom SIM bestätigt wurde, dass der Wahlschlüssel angekommen ist, wird der Wahlberechtigte 20 mit "hat gewählt" markiert. Somit wird die PIN des Wahlberechtigten 20 ungültig. Das Verwenden des PIN auf einer anderen vertrauenswürdigen Instanz 21 bzw. einem anderen mobilen Endgerät 23 bleibt somit erfolglos. Das Wahlapplet 24 ist logischerweise so programmiert, dass eine mehrfache Stimmabgabe nicht möglich ist.

### Schritt 14 - Das Wahlapplet24 /SIM erzeugt eine Zufallszahl:

Die erzeugte Zufallszahl sollte der Anzahl der Wahlberechtigten 20 gegenüber angemessen groß sein. Beispielsweise sollte die Zufallszahl eine Größe von 128 oder 256 Bit haben. Diese Zufallszahl erfüllt mehrere Funktionen. Aufgrund des verbindungslosen Netzwerkprotokolls werden die verschlüsselten Abstimminformationen prinzipbedingt mehrfach an den Stimmserver gesendet, siehe Schritt 16. Die Wahlinstanz 22, insbesondere die Stimmauswertinstanz 22c erkennt anhand der Zufallszahl die mehrfach eingegangenen Stimmzettel. Replay-Attacken für Wahlbetrug werden erfolgreich unterbunden. Ein Herausfinden der Abstimminformation ist somit auch nach dem Ende der Wahl praktisch unmöglich, siehe Abschnitt "Nach dem Ende der Wahl".

Es ist wichtig, dass möglichst jede Zufallszahl während der Wahl nur ein einziges Mal auftritt, ansonsten könnte ein gültiger Stimmzettel unter Umständen nicht gezählt werden. Das wird sichergestellt, indem für die Zufallszahlgenerierung ein sehr großer Zahlenraum verwendet wird, sodass keine Zufallszahl mehrfach generiert wird. Zur Erzeugung von Zufallszahlen gibt es verschiedene Verfahren, wobei das Hauptkriterium für eine Zufallszahl ist, ob das Ergebnis der Generierung als unabhängig von früheren Ergebnissen angesehen werden kann oder nicht.

### Schritt 15 - Verschlüsseln von Abstimminformation und Zufallszahl:

Das Wahlapplet 24 verschlüsselt die Abstimminformation bzw. dazu äquivalente Daten zusammen mit der in Schritt 14 erzeugten Zufallszahl. Zur Verschlüsselung wird der Wahlschlüssel aus Schritt 12 verwendet.

Aufgrund der Verschlüsselung ist die Abstimminformation mit Zufallszahl für die Öffentlichkeit nicht einsehbar, sodass das Abstimmen geheim ist. Nach Abschluss der Wahl wird jedoch der "öffentliche" Teil des Wahlschlüssels herausgegeben. Anhand des Quelltextes des Wahlapplets 24 bzw. der darin ersichtlichen Codierung der Stimmdaten zusammen mit der gespeicherten Zufallszahl können die Abstimminformationen nachgerechnet werden. Somit kann nachträglich die Anonymität des Abstimmens überprüft werden, indem geprüft wird, ob weitere Daten, insbesondere den Wähler identifizierende Daten, an den Stimmauswertserver 22c gesendet wurden.

Da die Zufallszahl auf dem SIM erzeugt wurde, ist offensichtlich, dass keine Zuordnung zum Wähler stattfindet. Nach Abschluss der Wahl können außerdem die statistischen Eigenschaften vieler oder sogar aller Zufallszahlen geprüft werden, so dass klar wird, dass die Zufallszahl keinerlei Informationen wie eine Endgeräte-ID enthalten.

### Schritt 16 - Versenden der Abstimminformation mit Zufallszahl:

Die verschlüsselte Abstimminformation (Stimmzettel = Wahlschlüssel(Abstimminfo + ZZ)) sendet das Wahlapplet 24 an den Stimmauswertserver 22c.

Die Datenübertragung erfolgt mittels UDP/IP oder RTP, da weder UDP noch RTP im Gegensatz zu TCP keinen Verbindungsaufbau benötigt. Dies wiederum ermöglicht es, ein UDP oder RTP-Packet ohne IP-Adresse zu versenden, da das Wahlapplet 24 überhaupt keine Antwort vom Stimmauswertserver 22c erwartet.

Der Versand ohne IP-Adresse bedeutet, dass entweder eine offensichtlich ungültige IP-Adresse (0.0.0.0) in das UDP-Packet eingefügt wird oder aus dem Adresspool des Mobilfunknetzbetreibers eine zufällige IP-Adresse ausgewählt wird. Letzteres ist dann notwendig, wenn das Gateway / der Router des Netzbetreibers die IP-Adresse im UDP-Paket auf Plausibilität prüft. Das Gateway / der Router setzt gewöhnlich bei der Weitergabe des Datenpakets seine eigene IP-Adresse ein, so dass es mit der Übertragung der verschlüsselten Abstimminformation via Internet keine Probleme gibt.

Durch die Verwendung von UDP wird die Anonymität bei der Stimmabgabe deutlich gesteigert, da eine Rückverfolgung des Datenpakets so deutlich aufwendiger wird.

Der Nachteil von UDP ist, dass im Gegensatz zu TCP nicht garantiert wird, dass das zu übertragende Datenpaket auch angekommen ist. Aus diesem Grund sendet das Wahlapplet 24 die verschlüsselte Abstimminformation mit Zufallszahl mehrfach, zum Beispiel fünfmal mit je 60 Sekunden Abstand. Zusätzlich ist es denkbar, dass auch die Adressangaben unterhalb von IP, also auf der Netzzugangsschicht, zum Beispiel die MAC-Adresse, beim Absenden der Stimme vom mobilen Endgerät 23 manipuliert wird, um so mehr Anonymität herzustellen. Dies ist möglich, da eine Antwort vom Stimmauswerteserver 22c nicht erwartet wird.

Sollte kein TCP/IP oder UDP/IP verfügbar sein, ist auch eine Variante über SMS-Kommunikation denkbar, allerdings zu Lasten der Anonymität beim Wählen.

### Schritt 17 - Auswerten der Stimme im Stimmauswertserver 22c:

Der Stimmauswertserver 22c empfängt die verschlüsselte Abstimminformation mit Zufallszahl und speichert diese ab. Existiert bereits verschlüsselte Abstimminformation mit derselben Zufallszahl, wird die neu ankommende Abstimminformation verworfen. Wichtig ist dabei, dass nur Abstimminformationen verworfen werden, die dieselbe Abstimminformation zusammen mit derselben Zufallszahl aufweisen. Bei den hierbei verwendeten großen Zufallszahlen von 128bit bzw. 256bit kann darauf vertraut werden, dass dieselbe Abstimminformation nochmals angekommen ist und deshalb verworfen werden kann.

Es besteht somit keine Notwendigkeit, die vorliegenden Abstimminformationen vor Schließung dem Ende der Wahl zu entschlüsseln. Dadurch ist es nicht notwendig, dass der private Teil des Wahlschlüssels (oder der symmetrische Wahlschlüssel) eine speziell abgesicherte Umgebung verlässt, um im Stimmauswertserver 22c verwendet zu werden.

### Schritt 18 - Abschluss der Stimmabgabe:

Der Wahlberechtigte 20 erhält vom Wahlapplet 24 eine Benachrichtigung, dass seine Abstimminformation an den Stimmauswertserver 22c gesendet wurde. Das Wahlapplet 24 lässt es außerdem nicht zu, dass nochmals ein Abstimminformation generiert wird und an den Stimmauswertserver 22c verschlüsselt gesendet wird, sofern es sich um denselben Wahlberechtigten 20 handelt, also dieselbe PIN und ggf. andere Identifizierungsdaten verwendet werden.

Es ist jedoch zulässig, dass auch andere Wahlberechtigte 20 dasselbe mobile Endgerät 23 mit derselben vertrauenswürdigen Instanz 21 nutzen, um ihre Abstimminformation dem Stimmauswertserver 22c zu senden. Der Registrierungsserver 22c sorgt in diesem Fall dafür, dass keine mehrfache Stimmabgabe erfolgen kann.

### Nach dem Ende der Wahl:

Damit sich die Öffentlichkeit davon überzeugen kann, dass die Wahl tatsächlich anonym abgelaufen ist, werden nach dem Ende der Wahl, beispielsweise nach Schließung der Wahllokale die gemäß Schritt 3 verwendeten symmetrischen OTA-Signaturschlüssel, die gemäß Schritt 5 erzeugten öffentlichen SIM-Schlüssel der SIM-Karten, ohne irgendeine Zuordnung zu den entsprechenden SIM-Karten und die gemäß Schritt 12 verwendeten "öffentlichen" Wahlschlüssel veröffentlicht. Der "private" Teil der Wahlschlüssel bleibt vorzugsweise geheim, damit ein möglicher Man-in-the-Middle Angriff erfolglos bleibt und die an den Stimmauswertserver 22c gesendeten Abstimminformationen nicht entschlüsselt werden können.

Mit Hilfe dieser Daten, durch die nicht verwendete Datenverschlüsselung sowie durch das öffentlich bekannte Wahlapplet 24 kann die Öffentlichkeit die Vertrauenswürdigkeit und (hohe) Anonymität der Wahl nachprüfen.

### Analyse bezüglich der Anonymität

Gemäß Schritt 2 kann mittels Vergleich der Wahlbenachrichtungen offensichtlich ermittelt werden, dass alle Wahlberechtigten 20 dieselbe Telefonnummer zur Wahlapplet-Anforderung wählen.

Das Applet 24 läuft auf einer SIM-Karte, die wiederum mit HW und SW-Sicherheitsmaßnahmen versehen ist. Somit können mit Hilfe des Quelltextes des Applets 24 - sofern es keine Design- oder Implementierungsfehler enthält - keine Angriffe gefunden werden. Der Quelltext kann somit bereits vor der Wahl offengelegt werden. Im Falle von ungerechtfertigten Bedenken kann dies auch nach der Wahl geschehen.

Die OTA-Datenübertragung ist nur signiert und nicht verschlüsselt. Es ist somit jeder fachkundigen Person mit entsprechender HW-Ausstattung in der Lage, den Datentransfer zu verfolgen und zu sehen, welche Daten übertragen werden.

Der Public Key des SIM in Schritt 6 ist nur signiert, kann also mitgelesen werden.

In Schritt 10 kann ein Angreifer zwar mitlesen, aber nichts verändern. Damit die Ausweisnummer nicht in falsche Hände gerät, kann hier optional auch eine 16-stellige PIN verwendet werden. Damit kann die Ausweisnummer entfallen.

In Schritt 12 wird der Wahlschlüssel mit dem Public Key des SIM verschlüsselt und mit dem Private Key des Reg-Servers verschlüsselt/ signiert. Der Wahlschlüssel bleibt bis zum Ende der Wahl geheim.

In Schritt 15 bleibt die Abstimminformation geheim, da mit dem "öffentlichen" Teil vom Wahlschlüssel verschlüsselt wird.

Nach der Wahl wird der "öffentliche" Wahlschlüssel veröffentlicht bzw. die Wahlschlüssel, wenn je Wahlkreis ein anderer Schlüssel verwendet wurde. Die vom Wahlapplet 24 verwendete Zufallszahl kann schon vor Ablauf der Wahl auf dem mobilen Endgerät 23 angezeigt werden. Zusammen mit den durch den Quelltext bekannten abgeschickten verschlüsselten Abstimminformationen kann nun öffentlich nachgeprüft werden, dass ausschließlich Zufallszahlen und Abstimminformationen übertragen wurden. Da die Zufallszahl für keinen Wahlberechtigten 20 vorhersagbar ist, kann auch nach Veröffentlichung des Wahlschlüssels ein mithörender Netzwerkprovider nicht herausfinden, welcher Wahlberechtigte 20 welche Abstimminformation gesendet hat. Er müsste dazu alle Zufallszahlen sowie Abstimmmöglichkeiten durchprobieren, da er nicht über den "privaten Wahlschlüssel" zum Entschlüsseln der verschlüsselten Abstimminformationen mit Zufallszahl verfügt. Der interessierte Wahlberechtigte 20 hingegen kann für sich die verschlüsselten Abstimminformationen mit Zufallszahl prüfen, da er leicht auf die Zufallszahl zugreifen kann.

Das Verfahren ist so ausgelegt, dass man auch mit einem mobilen Endgerät eines Dritten am Abstimmverfahren teilnehmen kann. Das SIM wird als vertrauenswürdige Instanz verwendet, jedoch nicht als Identifikationsmittel. Bei Abstimmen mittels SMS würde eine weitere Zwischen-Instanz in das System integriert, die die Abstimm- SMS analysiert und den Inhalt anonym an den Stimmauswertserver verschickt.

In Figur 3 ist exemplarische ein mobiles Endgerät 23 mit einer vertrauenswürdigen Instanz 21, hier eine SIM-Karte, mit einem darauf installierten Wahlapplet 24 dargestellt. Zur Abgabe der Stimme gemäß Schritt 8 wird der Wahlberechtigte aufgefordert, seine Abstimminformation in Form einer Eingabe 1 (für dafür) oder 2 (für dagegen) auf einem nicht dargestellten Tastenfeld einzugeben. Die grafische Oberfläche ist dabei frei gestaltbar. Die gesamte Kommunikation mit einer entfernten Wahlinstanz 22 oder den entsprechenden Unterinstanzen, wie Appletinstanz 22a, Registrierungsinstanz 22b oder Stimmauswertinstanz 22c erfolgt über ein Mobilfunknetz 25, vorzugsweise mittels UMTS oder GPRS Datenübertragung.

### Bezugszeichenliste

- 1: Wahlunterlagen zum Abstimmen über Mobilfunknetz,
- 2: Wahlapplet anfordern
- 3: Download des Wahlapplets (via OTA)
- 4: Download des öffentl. Schlüssels der Wahlinstanz bzw. Registrierungsinstanz
- 5: Erzeugen eines kryptograf. Schlüsselpaars der vertrauensw. Instanz
- 6: Upload des kryptografischen Schlüsselpaars via OTA
- 7: Weitergabe des öffentlichen Schlüssels an die Wahlinstanz bzw. Registrierungsinstanz
- 8: Erhalt von Abstimminformation
- 9: Identitätsnachweis durch PIN Eingabe des Wählers
- 10: Identifizierung des Wahlberechtigten 20 gegenüber Wahlinstanz 22 durch PIN
- 11: Prüfung der PIN im Registrierungsserver
- 12: Versenden des Wahlschlüssels an die vertrauenswürdige Instanz
- 13: Wähler als "hat gewählt" markieren
- 14: Vertrauensw. Instanz erzeugt Zufallszahl
- 15: Verschlüsseln der Abstimminformation und der Zufallszahl
- 16: Versenden der Abstimminfo. und Zufallszahl an Stimmauswertinstanz
- 17: Auswerten der Stimme in der Stimmauswertinstanz
- 18: Abschluss der Stimmabgabe
- 20: Wahlberechtigter
- 21: Vertrauenswürdige Instanz in mobilem Endgerät, SIM, Trusted Base
- 22: Wahlinstanz
22a Appletinstanz
22b Registrierungsinstanz
22c Stimmauswertinstanz
- 23: Mobiles Endgerät
- 24: Wahlapplet
- 25: Mobilfunknetz

## Patentansprüche

1. Verfahren zum elektronischen Abstimmen über ein Mobilfunknetz (25) in einer vertrauenswürdigen Instanz (21) in einem mobilen Endgerät (23) eines Wahlberechtigten (20) mit den Verfahrensschritten:
- Empfangen (9) eines Identitätsnachweises des Wahlberechtigten (20) in der vertrauenswürdigen Instanz (21) durch Eingabe einer persönlichen Identifikationsnummer durch den Wahlberechtigten (20) auf dem mobile Endgerät (23);
- Senden (10) der persönlichen Identifikationsnummer von der vertrauenswürdigen Instanz (21) im Endgerät (23) über das Mobilfunknetz (25) an eine Wahlinstanz (22) zum Überprüfen (11) der Berechtigung des Wahlberechtigten (20) für das elektronische Abstimmen;
- Empfangen (12) eines elektronischen Wahlschlüssels in der vertrauenswürdigen Instanz (21) von der Wahlinstanz (22) über das Mobilfunknetz (25) an die vertrauenswürdige Instanz (21) im Endgerät (23) nach der Überprüfung (11) der Berechtigung, wobei der Wahlschlüssel für alle Wahlberechtigten (20) zumindest einer Region gleich ist;
- Empfangen (8) einer Abstimminformation des Wahlberechtigten (20) in der vertrauenswürdigen Instanz (21);
- Erzeugen (14) einer Zufallszahl durch die vertrauenswürdige Instanz (21);
- Verschlüsseln (15) der Abstimminformation und der Zufallszahl mit dem Wahlschlüssel durch die vertrauenswürdige Instanz (21); und
- Senden (16) der verschlüsselten Abstimminformation und der Zufallszahl von der vertrauenswürdigen Instanz über das Mobilfunknetz (25) an die Wahlinstanz (22) mittels eines verbindungslosen Netzwerkprotokolls.

2. Verfahren gemäß Anspruch 1, wobei:
- ein Hashwert der persönlichen Identifikationsnummer in der vertrauenswürdigen Instanz (21) gebildet wird;
- der Hashwert mit einem privaten Schlüsselteils eines kryptografischen Schlüsselpaars der vertrauenswürdigen Instanz (21) verschlüsselt wird; und
- der öffentliche Schlüsselteil des kryptografischen Schlüsselpaars der Wahlinstanz (22) bekannt ist.

3. Verfahren nach Anspruch 1 oder 2, wobei der Wahlschlüssel ein symmetrischer oder asymmetrischer Wahlschlüssel ist und wobei der Wahlschlüssel ausschließlich in vertrauenswürdigen Instanzen (21) von Wahlberechtigten (20) empfangen werden kann.

4. Verfahren nach einem der vorhergehenden Ansprüche, wobei der Wahlschlüssel kryptografisch verschlüsselt, mit einem öffentlichen Schlüsselteil eines kryptografischen Schlüsselpaars der vertrauenswürdigen Instanz (21), in der vertrauenswürdigen Instanz (21) empfangen wird.

5. Verfahren nach Anspruch 4, wobei die vertrauenswürdige Instanz (21):
- den Wahlschlüssel mit einem privaten Schlüsselteil eines kryptografischen Schlüsselpaars der vertrauenswürdigen Instanz (21) entschlüsselt;
- die Signatur des Wahlschlüssels mit dem öffentlichen Schlüsselteil des kryptografischen Schlüsselpaars der Wahlinstanz (22) überprüft.

6. Verfahren nach einem der vorhergehenden Ansprüche, wobei das Senden (16) der verschlüsselten Abstimminformation und der Zufallszahl mittels UDP als verbindungsloses Netzwerkprotokoll von der vertrauenswürdigen Instanz mehrfach erfolgt.

7. Verfahren nach einem der vorhergehenden Ansprüche, wobei die vertrauenswürdige Instanz (21) dem Wahlberechtigten (20) das Senden der verschlüsselten Abstimminformation mit Zufallszahl bestätigt und wobei die vertrauenswürdige Instanz (21) das Versenden einer weiteren Abstimminformation mit einer neu generierten Zufallszahl des gleichen Wahlberechtigten (20) verhindert.

8. Verfahren nach einem der vorhergehenden Ansprüche, wobei verschiedene Wahlberechtigte (20) mittels derselben vertrauenswürdigen Instanz (21) aber unterschiedlicher persönlicher Identifikationsnummern elektronisch abstimmen können.

9. Verfahren zum elektronischen Abstimmen über ein Mobilfunknetz (25) in einer Wahlinstanz (22) mit den Verfahrensschritten:
- Empfangen (10) eines Identitätsnachweises des Wahlberechtigten (20) in Form einer persönlichen Identifikationsnummer von der vertrauenswürdigen Instanz (21) eines mobilen Endgeräts (23) über das Mobilfunknetz (25) in der Wahlinstanz (22) zum Überprüfen (11) der Berechtigung des Wahlberechtigten (20) für das elektronische Abstimmen;
- Überprüfen (11) der Teilnahmeberechtigung des Wahlberechtigten (20) an dem elektronischen Abstimmverfahren durch die Wahlinstanz (22);
- Senden (12) eines elektronischen Wahlschlüssels durch die Wahlinstanz (22) über das Mobilfunknetz (25) an die vertrauenswürdige Instanz (21), wenn der Wahlberechtigte (20) am elektronischen Abstimmverfahren teilnehmen darf, wobei der Wahlschlüssel für alle Wahlberechtigten (20) zumindest einer Region gleich ist;
- Empfangen (16) einer verschlüsselten Abstimminformation und Zufallszahl von der vertrauenswürdigen Instanz (21) über das Mobilfunknetz (25) in der Wahlinstanz (22) durch ein verbindungslosen Netzwerkprotokolls und;
- Entschlüsseln der verschlüsselten Abstimminformation und Zufallszahl und Auswerten (18) aller Abstimminformationen durch die Wahlinstanz (22), die mit unterschiedlicher Zufallszahl empfangen wurden.

10. Verfahren gemäß Anspruch 9, wobei die Wahlinstanz (22), insbesondere eine Appletinstanz (22a) der Wahlinstanz (22), ein Wahlapplet (24) an die vertrauenswürdige Instanz (21) auf Anfrage sendet und mit dem Senden (3) auch ein öffentlicher Schlüsselteil der Wahlinstanz gesendet (4) wird.

11. Verfahren gemäß einem der Ansprüche 9 bis 11, wobei der Wahlinstanz (22), insbesondere einer Registrierungsinstanz (22b) der Wahlinstanz (22), die öffentlichen Schlüsselteile aller vertrauenswürdigen Instanzen (21) vorliegen und das Überprüfen (11) der Teilnahmeberechtigung erfolgt durch:
- Empfangen (10) der persönlichen Identifikationsnummer signiert mit einem privaten Schlüsselteil eines Schlüsselpaars der vertrauenswürdigen Instanz (21);
- Vergleichen der Signatur der persönlichen Identifikationsnummer mit den Signaturen aller öffentlichen Schlüsselteile der vertrauenswürdigen Instanzen (21); und
- Senden (12) des Wahlschlüssels, sobald irgendeine Signatur der öffentlichen Schlüsselteile der Schlüsselpaare der vertrauenswürdigen Instanzen (21) mit der Signatur der persönlichen Identifikationsnummer übereinstimmt.

12. Verfahren nach einem der vorhergehenden Ansprüche, wobei ein Registrieren (13) der persönlichen Identifikationsnummer in der Wahlinstanz (22), insbesondere der Registrierungsinstanz (22b), nach Wahlschlüsselempfangsbestätigung der vertrauenswürdigen Instanz (21) in der Form erfolgt, dass ein weiteres Anfordern eines Wahlschlüssels durch die vertrauenswürdige Instanz (21) erfolglos bleibt.

13. Verfahren zum Registrieren eines Wahlberechtigten (20) an einem Verfahren zum elektronischen Abstimmen über ein Mobilfunknetz (25) gemäß einem der Ansprüche 1 bis 8 mit den Verfahrensschritten:
- Übertragen (3) eines Wahlapplets von einer Wahlinstanz (22), insbesondere einer Appletinstanz (22a), über das Mobilfunknetz (25) an eine vertrauenswürdige Instanz (21) in einem mobilen Endgerät (23) eines Wahlberechtigten (20);
- Erzeugen (5) eines öffentlichen und eines privaten Schlüsselteils eines kryptografischen Schlüsselpaars durch die vertrauenswürdige Instanz (21) im mobilen Endgerät (23) des Wahlberechtigten (20), wobei das Schlüsselpaar der vertrauenswürdigen Instanz (21) eindeutig zugeordnet ist; und
- Übertragen (6) des öffentlichen Schlüsselteils des kryptografischen Schlüsselpaars an die Wahlinstanz (22), insbesondere die Registrierungsinstanz (22b).

14. Verfahren nach Anspruch 14, wobei:
- das Wahlapplet unverschlüsselt übertragen (3) aber signiert übertragen wird; und
- der öffentliche Schlüsselteil des kryptografischen Schlüsselpaars der vertrauenswürdigen Instanz (21) unverschlüsselt und signiert übertragen wird.
